## Europäisches Patentamt

## European Patent Office

## Office européen des brevets

(19)

(11) Veröffentlichungsnummer: **0 195 241**
**B1**

(12)

# EUROPÄISCHE PATENTSCHRIFT

(45) Veröffentlichungstag der Patentschrift:
**12.10.88**

(51) Int. Cl.⁴: **B 65 G 57/06, B 65 G 57/24**

(21) Anmeldenummer: **86101775.4**

(22) Anmeldetag: **12.02.86**

(54) **Vorrichtung zum Beladen von Stückgütern auf Paletten.**

(30) Priorität: **18.03.85 DE 3509705**

(43) Veröffentlichungstag der Anmeldung:
**24.09.86 Patentblatt 86/39**

(45) Bekanntmachung des Hinweises auf die Patenterteilung:
**12.10.88 Patentblatt 88/41**

(84) Benannte Vertragsstaaten:
**BE DE FR GB IT NL SE**

(56) Entgegenhaltungen:
**DE-B-1 283 747**
**FR-A-2 130 124**
**GB-A-1 055 116**
**US-A-3 756 378**
**US-A-3 770 106**

(73) Patentinhaber: **Kolbus GmbH & Co. KG,**
**Osnabrücker Strasse 77, D-4993 Rahden (DE)**
Patentinhaber: **Leifeld & Lemke Maschinenfabrik**
**GmbH & Co. KG, Osnabrücker Strasse 77, D-4993**
**Rahden (DE)**

(72) Erfinder: **Blidschun, Benno, Krokusweg 7, D-4900**
**Herford (DE)**

## Beschreibung

Die Erfindung betrifft eine Vorrichtung zum Beladen von Stückgütern auf Paletten, mit einer Stückgüter tragenden und zum Überführen auf eine Stapel stelle unter den Stückgütern wegziehbaren Plattform und mit einem Rückhaltemittel zum Sichern der Stückgüter beim Wegziehen der Plattform, wobei diese aus einer Gruppe von Tragstäben gebildet ist, die an angetriebenen, um Umlenkräder geführte Ketten befestigt sind.

Bei Palettiermaschinen zum Beladen von Paletten mit Stückgütern, beispielsweise Flaschenkästen, kommen vielfach anstelle der starren horizontal verfahrbaren Beladeplattform platzsparende umlaufend angetriebene Abstützsysteme zum Einsatz, die aus einer Gruppe von an Ketten angelenkten, die Plattform bildenden Tragstäben bestehen.

Eine Maschine zum Stapeln von quaderförmigen Gegenständen in wählbaren Lademustern auf Paletten ist aus der DE-AS-1 283 747 be kannt, in der ein umlaufendes, sich aus einzelnen Tragstäben zusammensetzendes Abstützsystem Verwendung findet. Dabei sind die Tragstäbe an Kettengliedern von parallelen Ketten befestigt, die rechtwinklig um Umlenkräder geführt und von Kettenrädern intermittierend angetrieben werden. Nachdem die abzustapelnden Gegenstände in ihrer Position durch Rückhaltemittel gesichert sind, laufen die Tragstäbe des Abstützsystems unter den Gegenständen hinweg, wodurch sich diese auf eine Palette bzw. auf eine bereits vorhandene Schicht von Gegenständen ablegen.

In der oberen Position stützen sich die Tragstäbe mit ihren Seitenflächen gegeneinander ab und bilden somit eine durchgehende Tragfläche. Derartig aneinandergereihte Stäbe können jedoch keine in sich stabile Fläche ergeben, so daß eine solche Konstruktion zur Durchbiegung in Längs- und Querrichtung neigt und infolgedessen zum Palettieren von schwereren Stückgütern, wie gefüllte Flaschenkästen, ungeeignet ist.

Bedingt durch nicht zu vermeidende Kettenlängung, durch Spiel in den Lagerstellen der Tragstäbe sowie durch Fertigungsungenauigkeiten ist eine bündige Lage der einzelnen Tragstäbe und somit die zwingend erforderliche glatte Oberfläche nicht einzuhalten, mit der Folge, daß das Aufschieben von Gegenständen auf die Tragfläche sowie das Wegziehen derselben unter den Gegenständen nicht frei von Störungen sein kann. Vor allem beim Palettieren von empfindlichen Stückgütern kann bereits ein geringfügig aus der Tragfläche herausstehender Stab Beschädigungen am Stückgut verursachen.

Anstelle der starren, platzbeanspruchenden Ladeplattform kommen des weiteren sogenannte Rollenteppiche als umlaufende Abstützsysteme zum Einsatz. Auch eine solche Plattformausgestaltung weist einen in Abhängigkeit vom Gewicht der zu stapelnden Stückgüter mehr oder weniger starken Durchhang auf und bietet somit ebenso nicht die für eine funktionssichere Arbeitsweise notwendige gerade Tragfläche.

Vor allem zum Palettieren von relativ schweren Stückgütern, wie gefüllte Flaschenkästen, ist ein Rollenteppich nicht geeignet, es sei denn mit einem entsprechenden baulichen Mehraufwand durch zusätzliche Abstützung der Rollen sowie durch die Wahl eines relativ großen Rollendurchmessers. Letzteres ist in höchstem Maße unerwünscht, da hierdurch die Fallhöhe vergrößert wird, was zu Beschädigungen der Produkte führen kann und den Geräuschpegel stark heraufsetzt. Auch ist die Herstellung eines Rollenteppichs verhältnismäßig aufwendig, bedingt durch reibungsgünstige Einzellagerung der Rollen.

Die Aufgabe der Erfindung besteht darin, eine Vorrichtung zum Beladen von Stückgütern auf Paletten der gattungsgemäßen Art dahingehend zu verbessern, daß bei kostengünstiger Bauweise die erwähnten an den bekannten Systemen auftretenden Nachteile in Fortfall gelangen und ein funktionssicheres Palettieren auch von schwereren und empfindlichen Stückgütern sichergestellt ist.

Ausgehend von einer Vorrichtung zum Beladen von Stückgütern auf Paletten, mit einer Stückgüter tragenden und zum Überführen auf eine Stapelstelle unter den Stückgütern wegziehbaren Plattform und mit einem Rückhaltemittel zum Sichern der Stückgüter beim Wegziehen der Plattform, wobei diese aus einer Gruppe von Tragstäben gebildet ist, die an angetriebenen, um Umlenkräder geführten Ketten befestigt sind, wird die Aufgabe der Erfindung dadurch gelöst, daß die Tragstäbe als in der Horizontalebene formschlüssig untereinander in Eingriff stehende Profilstäbe ausgebildet sind. Weitere vorteilhafte Ausgestaltungen sind in den Unteransprüchen gekennzeichnet.

Die aus einzelnen ineinandergreifenden Profilstäben gebildete Ladeplattform stellt eine platzsparende in sich stabile Konstruktion dar, mit einer geraden, lückenlosen Oberfläche, deren Stäbe stets auf gleicher Ebene liegen. Mit Hilfe der erfindungsgemäßen Plattform läßt sich sowohl das Aufschieben der zu stapelnden Gegenstände als auch das Wegziehen des Plattenteppichs unter den Gegenständen störungsfrei bei allen anfallenden zu stapelnden Stückgutarten bewerkstelligen. Bedingt durch die selbsttragende Bauweise lassen sich Plattenstärke und somit Fallhöhe auf ein Mindestmaß reduzieren, was eine schonende Behandlung der Produkte bei geräuscharmer Arbeitsweise garantiert.

Ein Ausführungsbeispiel der Vorrichtung nach der Erfindung zum Beladen von Stückgütern auf Paletten wird nachfolgend anhand schematischer Zeichnungen näher beschrieben. Dabei zeigen:

Fig. 1 die Vorrichtung in ihrer Gesamtanordnung in einer Seitenansicht,

Fig. 2 in vergrößertem Maßstab einen Abschnitt des in der Vorrichtung eingesetzten erfindungsgemäßen Plattenteppichs.

Die Vorrichtung zum lagenweisen Beladen von Paletten 2 mit Stückgütern, beispielsweise Flaschenkästen 1, besteht im wesentlichen aus einem Grundgestell 3 mit einem Portal 4 und aus einem an diesem über einer Palettenbeladestation höhenverfahrbaren Tragrahmen 5 mit zwei an einem umlaufenden Kettensystem 12 angeordneten als Plattenteppich 6 ausgebildeten Lagenbereitstellungsebenen. Von einem Rollenförderer 7 in einer definierten Höhe werden die Flaschenkästen 1 mittels eines Überschiebers 8 reihenweise der auf das vorbestimmte Niveau gefahrenen Lagenbereitstellungsebene zugeführt und auf dieser zu einer Stückgutlage zusammengestellt.

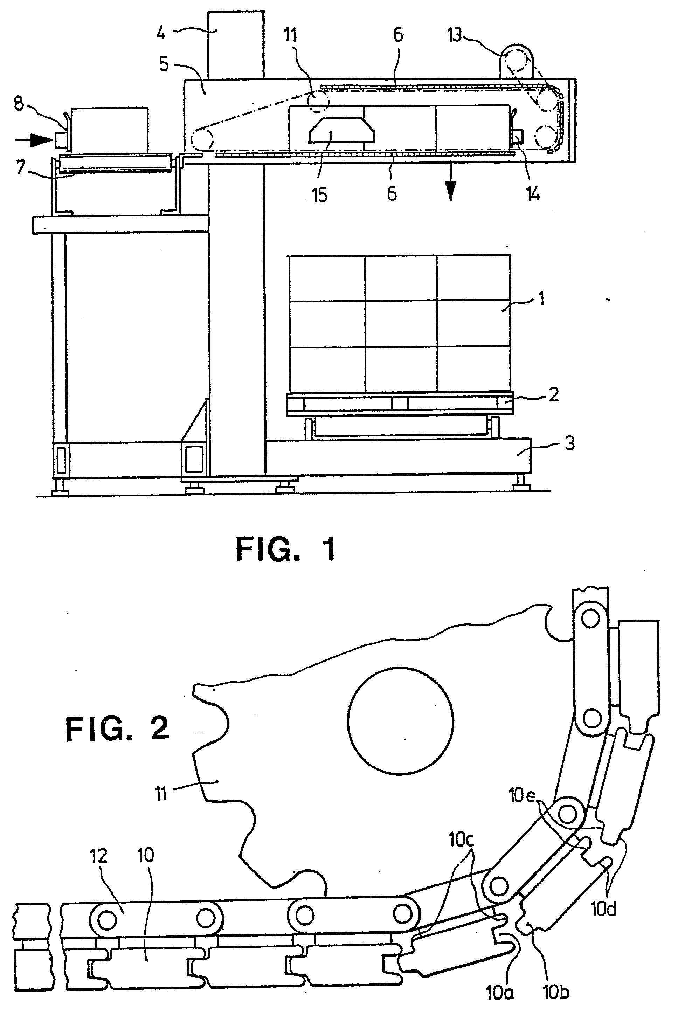

Die erfindungsgemäße Vorrichtung weist zwei abständig zueinander angeordnete Plattenteppiche 6 auf, die jeweils nacheinander in Funktion treten. Dabei besteht jeder Plattenteppich aus einer Gruppe einzelner Tragstäbe 10, wie dies aus der Figur 2 ersichtlich ist, die an zwei um Umlenkräder 11 geführte Ketten 12 angelenkt sind, wobei diese von einem auf dem Tragrahmen 5 sitzenden Motor 13 intermittierend angetrieben werden.

In der Übernahmeposition befinden sich die Plattenteppiche 6 jeweils auf dem Niveau des Rollenförderers 7 und bilden mit ihren nach innen weisenden Flächen im unteren Trum die Arbeitsfläche. Die einzelnen Tragstäbe 10 sind als Profilstäbe ausgestaltet, die in der geraden Ebene in der Art einer Nut- und Federverbindung 10a 10b ineinandergreifen und somit eine in sich stabile Tragfläche ergeben. Je einem Glied der Kette 12 ist ein Profilstab zugeordnet, wo bei die Teilung der Kette der Teilung der Profilstäbe entspricht. Der gegenseitige formschlüssige Eingriff der Stäbe 10 bietet die Gewähr dafür, daß diese stets auf gleicher Ebene liegen und somit ein störungsfreies Überschieben der Stückgutreihen und ein störungsfreies Drunterwegziehen des Plattenteppichs unter den Stückgutreihen sichergestellt ist. Durch Wegziehen des Plattenteppichs werden die Stückgutreihen nacheinander auf eine bereitgestellte Palette 2 bzw. auf eine bereits abgestapelte Stückgutlage verbracht, nachdem zuvor der Plattenteppich bis zur Stapelhöhe abgesenkt und die Stückgutlage von einem Rückhaltemittel 14 in ihrer Position gesichert wurde. Letztlich lassen sich die Stückgutreihen noch durch seitlich angeordnete Führungsbleche 15 ausrichten.

Als eine zusätzliche Maßnahme im Hinblick auf ein behinderungsfreies Überschieben der Stückgüter bzw. Wegziehen des Plattenteppichs wurden die Flächen der Tragstäbe 10 an ihren quer zur Bewegungsrichtung verlaufenden, zu den Stückgütern hinweisenden Kanten mit Rundungen 10c oder Abflachungen versehen, um somit die Gefahr auszuschließen, daß möglicherweise vorhandene Überstände an den Stückgütern vor die Tragstäbe stoßen.

Um das formschlüssige Ineinandergreifen bzw. das Trennen der Profilstäbe in den Umlenkbereichen zu ermöglichen, sind die den Stützflächen 10e gegenüberliegenden Stützflächen 10d in Abhängigkeit vom Umlenkradius zueinander entgegengesetzt abgeschrägt, während die den Ketten 12 benachbarten Stützflächen 10e parallel zu den Profilstäben 10 verlaufen. Durch diese Ausgestaltung der Stäbe wird ein gegenseitiges Auseinanderdrücken ausgeschlossen.

Anstelle des hier gewählten eckigen Formschlußprofils wäre ebenso ein Profil mit schräg verlaufenden Flächen denkbar, z. B. ein dreieckförmiges Profil. Des weiteren könnte das sich über die Gesamtbreite der Stäbe erstreckende Profil in der Art einer Verzahnung unterbrochen sein. Letztlich kann auch der obere Trum mit seinen nach außen weisenden Flächen der Tragstäbe die Lagenbereitstellungsebene bilden, was jedoch den Platzbedarf der Palettiervorrichtung wesentlich vergrößern würde.

**Patentansprüche**

1. Vorrichtung zum Beladen von Stückgütern auf Paletten, mit einer Stückgüter (1) tragenden und zum Überführen auf einestelle unter den Stückgütern (1) wegziehbaren Plattform (6) und mit einem Rückhaltemittel (14) zum Sichern der Stückgüter (1) beim Wegziehen der Plattform (6), wobei diese aus einer Gruppe von Tragstäben (10) gebildet ist, die an angetriebenen, um Umlenkräder (11) geführten Ketten (12) befestigt sind, dadurch gekennzeichnet, daß die Tragstäbe (10) als in der Horizontalebene formschlüssig untereinander in Eingriff stehende Profilstäbe (10) ausgebildet sind.

2. Vorrichtung nach Anspruch 1, dadurch gekennzeichnet, daß die Profilstäbe (10) als in der Art einer Nut- und Federverbindung (10a, 10b) ineinandergreifende Stäbe ausgebildet sind.

3. Vorrichtung nach Anspruch 1 oder 2, dadurch gekennzeichnet, daß die Profilstäbe (10) je einem Glied einer Kette (12) zugeordnet sind und die Teilung der Ketten (12) der Teilung der Profilstäbe (10) entspricht.

4. Vorrichtung nach Anspruch 1 bis 3, dadurch gekennzeichnet, daß den Ketten (12) benachbarte Stützflächen (10e) parallel zu den Profilstäben (10) verlaufen und die den Stützflächen (10e) gegenüberliegenden Stützflächen (10d) in Abhängigkeit vom Umlenkradius zueinander entgegengesetzt abgeschrägt sind.

5. Vorrichtung nach Anspruch 1 bis 4, dadurch gekennzeichnet, daß die Flächen der Profilstäbe (10) an ihren quer zur Bewegungsrichtung verlaufenden zu den Stückgütern hinweisenden Kanten (10c) abgerundet oder abgeschrägt sind.

6. Vorrichtung nach Anspruch 1 bis 5, dadurch gekennzeichnet, daß die Gruppe von Profilstäben an umlaufenden Ketten (12) angeordnet ist und die Plattform im unteren Trum von den innen liegenden Flächen der Profilstäbe (10) gebildet wird.

## Claims

1. Apparatus for loading individual articles onto pallets, with a platform (6) which carries individual articles (1) and which can be withdrawn from beneath them in order to effect transfer to a stacking station, and with a restraining means (14) for holding the said articles (1) securely while the platform (6) is being withdrawn, this platform being formed by a group of load-carrying bars (10), fastened to driven chains (12) which are led around direction-changing wheels (11) characterized in that the load-carrying bars (10) are designed as profile-section bars (10) which interengage positively in the horizontal plane.

2. Apparatus according to claim 1, characterized in that the profile-section bars (10) are configured as bars which interengage in the manner of a tongue and groove joint (10a, 10b).

3. Apparatus according to claim 1 or 2, characterized in that a profile-section bar (10) is assigned to each link of a chain (12), the pitch of the chains (12) corresponding to the distance between the centres of successive profile-section bars (10).

4. Apparatus according to any one of claims 1 to 3, characterized in that bearing surfaces (10e) adjacent to the chains (12) run parallel to the profile-section bars (10), and the bearing surfaces (10d) - on the opposite side to the bearing surfaces (10e) - are sloped in a manner such that they complement each other, and to a degree that depends on the radius of the changes of direction.

5. Apparatus according to any one of claims 1 to 4, characterized in that the surfaces of the profile-section bars (10) are rounded or bevelled at their edges (10c) transverse to the movement direction, on the side facing the individual articles.

6. Apparatus according to any one of claims 1 to 5, characterized in that the group of profile-section bars are installed on chains (12) which move on an endless path, and the platform is formed in the lower portion of the chain path, by the inside surfaces of the profile-section bars (10).

## Revendications

1. Dispositif de chargement de colis sur palettes, comprenant une plate-forme (6), qui supporte des colis (1) et qui peut être enlevée d'en dessous les colis (1) pour le transfert à un emplacement d'empilage, et un moyen de retenue (14) pour bloquer les colis (1) lors de l'enlèvement de la plate-forme (6), celle-ci étant formée d'un groupe de barres de support (10) qui sont fixées sur des chaînes (12) entraînées et guidées autour de roues de renvoi (11), caractérisé en ce que les barres de support (10) sont réalisées sous la forme de barres profilées (10) qui sont mutuellement en prise dans un plan horizontal, en réalisant une liaison de forme.

2. Dispositif suivant la revendication 1, caractérisé en ce que les barres profilées (10) sont réalisées sous la forme de barres qui s'engrènent à la manière d'une liaison à languette et à rainure (10a, 10b).

3. Dispositif suivant l'une ou l'autre des revendications 1 et 2, caractérisé en ce que les barres profilées (10) sont chacune adjointes à un élément d'une chaîne (12) et en ce que la division des chaînes (12) correspond à la division des barres profilées (10).

4. Dispositif suivant l'une des revendications 1 à 3, caractérisé en ce que des surfaces d'appui (10e) voisines des chaînes sont disposées parallèlement aux barres profilées (10) et en ce que les sufaces d'appui (10d), situées en face des surfaces d'appui (10e), sont biseautées de manière complémentaire en fonction du rayon de renvoi.

5. Dispositif suivant l'une des revendications 1 à 4, caractérisé en ce que les surfaces des barres profilées (10) sont arrondies ou biseautées sur leurs arêtes (10c) qui sont disposées transversalement au sens de déplacement et qui sont en regard des colis.

6. Dispositif suivant l'une des revendications 1 à 5, caractérisé en ce que le groupe de barres profilées est agencé sur des chaînes en circulation (12) et en ce que la plate-forme est formée, dans le brin inférieur, par les faces situées à l'intérieur des barres profilées (10).

FIG. 1

FIG. 2